# EUROPEAN PATENT SPECIFICATION

(11) **EP 2 900 443 B1**
(45) Date of publication and mention of the grant of the patent: **01.02.2017**
(21) Application number: 13842663.0
(22) Date of filing: 10.09.2013
(51) Int. Cl.: B29C 35/08, B05D 3/06

(54) **COMPUTER CONTROLLED UV LED CURING APPARATUS**
RECHNERGESTEUERTE UV-LED-AUSHÄRTUNGSVORRICHTUNG
APPAREIL DE SÉCHAGE SOUS DIODES ÉLECTROLUMINESCENTES À ULTRAVIOLETS COMMANDÉ PAR ORDINATEUR

(30) Priority: 26.09.2012 DK 201270587
(43) Date of publication of application: 05.08.2015
(73) Proprietor: Othonia Curing Technology ApS, 5230 Odense M (DK)
(72) Inventor: OESTERGAARD, John Erland, DK-5230 Odense M (DK); JOHANSEN, Poul V. Lindstorff, DK-5260 Odense S (DK)
(74) Representative: Orsnes, Henrik Egede
(86) International application number: PCT/DK2013/050287
(87) International publication number: WO 2014/048436

(56) References cited:
- WO-A1-2004/029567
- WO-A1-2005/108978
- WO-A1-2005/108978
- WO-A1-2009/132245
- WO-A1-2011/097694
- CA-A1- 2 593 163
- US-A1- 2005 154 075

## Description

### FIELD OF THE INVENTION

The present invention generally relates to an apparatus for curing photosensitive materials according to claim 1.

### BACKGROUND OF THE INVENTION

Document US-A1-2005/0154075 discloses a UV curing apparatus for the curing of a UV curable product according to the preamble of claim 1.

Photo-curing systems typically use mercury-arc lamps to flood the UV sensitive material with UV light. While mercury-arc lamp technology is widely used, such technology has several disadvantages. The most obvious disadvantage is the life span of the mercury bulbs used in the mercury-arc lamps. Mercury bulbs have a relatively short life, typically 100-1000 hours. Further, the mercury bulb degrades nonlinearly during its lifetime. As a result, conventional mercury-arc photocuring systems often require means to monitor and adjust the output power as the mercury bulb degrades. Further, mercury-arc lamps are typically powered on even during stand-by periods because they require cumbersome warm-up and cool-down cycles; as a result, much of the life of the mercury bulbs may be lost during these stand-by periods. Another disadvantage involves the broad spectrum of the light radiated by the mercury-arc lamp. A mercury-arc lamp radiates UV and infra-red (IR) light. Typically, UV band pass filters transmit the portion of the UV spectrum required for curing a particular photosensitive material. In addition, heat-rejecting IR filters are usually employed to prevent heating of the cure surface. Because the IR radiation creates a very hot lamp housing, transmission optics proximate to the lamp housing must be made of temperature resistant, UV-transmissive materials. The introduction of UV light emitting diodes (LEDs) has created new alternatives for curing some UV sensitive materials. LED technology offers several advantages over the traditional mercury-arc technology. First, typical LEDs last between 50,000 to 100,000 hours, providing a significant lifespan improvement over mercury-arc technologies. Second, UV LEDs do not emit significant IR radiation, so heat-rejecting IR filtration is not required.

LED sources can also be turned on and off as required because LEDs do not require the warm-up and cool-down periods common in mercury-arc lamp systems. Some LED curing systems may implement driver circuits to control the current supplied to the LEDs. These circuits typically use a closed-loop system to monitor and control the output power of the LEDs, by controlling the drive current, to provide a stable and reliable UV source. These circuits may also define different curing cycles for different photosensitive materials, such as emitting a specific output power for a specific length of time.

UV light-emitting diodes (LEDs) and UV lamps have been proposed for supplying UV light for curing UV curable inks, coatings and adhesives on various products. Many of the prior art techniques are time-consuming and inefficient and can cause uneven curing of the products.

The prior proposals teach one to stagger rows of UV-LED's in different arrays on a panel positioned closely adjacent a product to be cured, to move the product past the array, to move the array in a generally orbital path to uniformly apply UV light on the product and to inject an inert, heavier than air or lighter than air gas in the area between the panel and the product.

Also it has been learned that different wavelengths of UV light are better suited for different thicknesses of ink, coating or adhesive and/or for different components in the ink coating or adhesive. For example, thick polymers require longer wavelengths for curing. Surface curing requires shorter wavelengths.

Unfortunately, conventional LED sources and LED systems have relatively low output power compared to traditional mercury-arc lamps. While the lower output power LED photocuring systems have proven to be sufficient for some applications, many commercial and industrial UV sensitive materials require higher output powers to cure properly.

Another problem in relation to curing is to control the thickness of the cured layer as well as to control when the curing of a given area is fully completed.

US7137696B2 discloses an apparatus for the application of UV light from at least one UV-LED array to a product being applied with UV curable ink. US7137696B2 further discloses the use of several arrays of UV LED assemblies. US7137696B2 also discloses a curing station where a product is printed and placed on a support where the UV-LED arrays are moved or recipro-cated over the printed product to cure the print. The product can be planar or have a curved shape (such as a cell phone housing). The apparatus disclosed in US7137696B2 is not able to control when the curing of an area of UV curable coating is fully completed.

Hence, there remains a need for high intensity LED-based curing systems that address one or more problems outlined above.

### SUMMARY OF THE INVENTION

The present invention provides an improved ultraviolet (UV) LED based curing apparatus, which quickly, efficiently and effectively cures UV curable products, articles, inks, coatings, adhesives, and other objects. Advantageously, the user-friendly UV curing apparatus are economical, dependable and easy-to-use.

As will be described in greater detail hereinafter, the apparatus of the present invention provide techniques and structures for applying LED UV to a UV curable product, article, ink, coating, adhesive, or other object to be cured thereby reducing the curing time and quality of the cured product.

This is achieved by using a set of UV LEDs with different wavelengths, said wavelengths representing the absorption maxima of a photo initiator included in the product to be cured. Moreover, a photographic camera is used to monitor the curing process in a feed-back regulation with the LEDs, whereby a very even curing is obtained.

According to one aspect of the present invention, there is provided a UV curing apparatus for the curing of a UV curable product having a UV curable coating thereon comprising:
at least two arrays of UV LEDs with appropriate cooling means;
a positioning mechanism for placing the UV curable product in the light zone of the UV LEDs;
a thermographic camera for monitoring the curing of the UV curable coating, ink or adhesive;
a computer control unit that controls the curing process via the positioning mechanism by positioning of the product in the light zone in response to curing information received from the thermographic camera.

The inventors have surprisingly found that when more LEDs having different wavelengths matching the absorption maxima of the photoinitiator(s) used in the curing material a much more even curing is obtained. Also the use of a thermographic camera has enabled the inventors to make very reproducible and even curing layers within the shortest possible time periods. Importantly, these layers are fully cured leaving no zones with uncured material.

As an additional means for ensuring an even thickness of the cured layer the present invention uses photoacoustic resonance spectometry to determine the thickness by pulsing one or more the LEDs.

Moreover, the present invention in a preferred embodiment integrates a VOC sensor for detecting residual monomeric curing compounds (or other volatiles) involved in the curing process. It has been demonstrated that such volatile compounds are present in high concentration during the curing process but decrease in concentration when the curing process is completed. Hence, this is a good measure also in relation to monitoring and feed-back regulating the curing process.

There is also provided a method that is not part of the invention, for the curing of a UV curable product having a UV curable coating thereon comprising:
placing the UV curable product in the light zone of UV LEDs;
curing the product until the temperature of UV curable coating decreases by monitoring the temperature with a thermographic camera

The apparatus of the present invention provide substantially uniform continuous or intermittent blasts or pulses of high intensity UV light are emitted from UV light emitters in one or more UV curing apparatus at a substantially constant output level and intensity along one or more UV light paths.

The UV light emitters are super high power UV-LED modules with high intensity UV-LED chips. Significantly, the high intensity UV-LED chips are prevented from being positioned opposite each other and in the path of the high intensity UV light so that the high intensity UV light does not contact and degrade the high intensity UV-LED chips. The UV curable products, articles, inks, coatings, adhesives, and other objects can be intermittently, sequentially or continuously positioned in the UV light path. Desirably, the UV light is substantially uniformly applied and distributed on the UV curable products, articles, inks, coatings, adhesives, and other products in the UV light path. Advantageously, thereafter, the UV curable products, articles, inks, coatings, adhesives, and other objects are partially or fully substantially uniformly and evenly polymerized, set and cured in the UV-light path with the intermittent blasts or pulses of UV light.

The UV curable products, articles, inks, coatings, adhesives, and other objects can be conveyed by a conveyor in the light path. The UV curable products, articles, inks, coatings, adhesives, and other objects can also be spun or rotated in the light path to enhance uniform distribution and application of UV light and curing on the UV curable products, articles, inks, coatings, adhesives, and other objects. In some circumstances, such as for some types of UV printing, it may be desirable to position, stop, or maintain the UV curable products, articles, inks, coatings, adhesives, and other objects in a stationary fixed location and position on the UV light path during curing.

### BRIEF DESCRIPTION OF THE DRAWINGS

- Figure 1: shows an LED curing lamp with feedback system.
- Figure 2: shows curing lamp with a robotic positioning system for curing of 3-D Items.

### DETAILED DESCRIPTION OF THE INVENTION

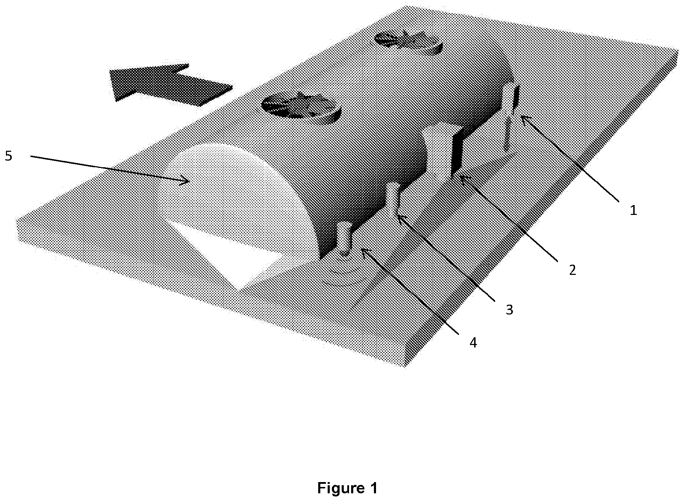

Referring to Figure 1 there is shown an LED based curing lamp according to the present invention comprising a reflector (5) with cooling fans for removing the heat generated by the UV LED's. The multiple wavelengths from the UV LED are focused in a line on the surface of the curing material. On the backside of the reflector in relation to the moving direction of the curing material sensors are mounted for controlling the curing process. In a preferred embodiment such sensors include a laser distance measurement sensor (1), a thermographic camera (2), a photodiode for measurement of the UV LED irradiance (3), and a microphone feed-back system (4).

It is envisaged by the present invention to use the laser distance measurement sensor for measuring the distance from the bottom of the reflector to the curing material. Moreover, the thermographic camera (2) measures the temperature profile of the cured material. The camera is intelligent and gives feed back to the central computer about the quality of the cured material. It is envisaged by the present invention to monitor the curing process (which is typically exothermic) with the camera to decide when the process has been completed within the focus area of the thermographic camera (2). A computer controls the speed of the conveyor belt or the speed of a robot arm in response to information gathered by the thermographic camera (2) to ensure a homogeneous curing.

The photodiode for measurement of the UV LED irradiance also communicates with the (central) computer thereby controlling and adjusting the UV LED irradiance to a preprogrammed level for the curing material.

The microphone feed-back system (4) is using the photo acoustic effect for measuring the thickness of the cured material. This is a major advantage of the present invention that such a simple device can be used to i) ensure a homogeneous thickness of the cured layer, and ii) make sure that the curing process is completed (along with the feedback from the thermographic camera (2). This is a very efficient way to obtain an evenly cured layer.

The principle by which this technique works is that light from the UV LED's are periodically absorbed in the curing material, heating the air at its surface and thereby generating pressure waves. These waves resonate in the pipe and are detected as sound by the microphone. When thickness of the curing material is thinner than its thermal diffusion length, heat is lost to the air by conduction, resulting in decreased acoustic signal strength, which varies according to thickness.

At thicknesses beyond the thermal diffusion length, there is no discernible change in signal strength, so the method works only for thicknesses less than that. By selecting a chopper frequency to the UV LED's that will produce a resonance in the pipe due to the photo-acoustic effect from the cured material, it is possible to detect small variations in thickness of the cured material. Direct, online measurements will be made by first correlating the thickness of the given cured material with the resulting acoustic signal strength.

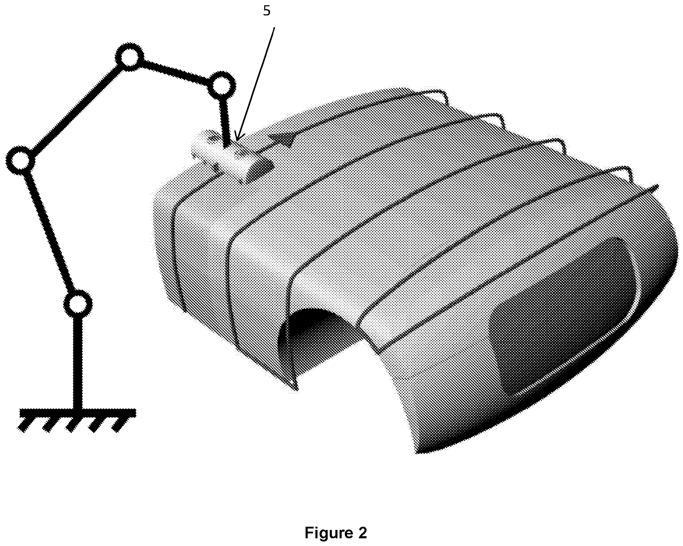

As an example Fig.2 shows a 3-D curing system with a robot where the curing lamp is mounted. The robot and the control system are using all the sensors described in Figure 1 for planning the movement and speed of the robot. The direction of the movement is shown.

## Claims

1. A UV curing apparatus for the curing of a UV curable product having a UV curable coating thereon comprising:
at least two arrays of UV LEDs;
a positioning mechanism for placing the UV curable product in the light zone of the UV LEDs;
**characterized in that** said UV curing apparatus further comprises:
a thermographic camera (2) for monitoring the curing of the UV curable coating, ink or adhesive;
and wherein a computer control unit controls the curing process via the positioning mechanism by positioning of the product in the light zone in response to curing information received from the thermographic camera (2).

2. The UV curing apparatus of claim 1 further comprising a gas injector for injecting a gas in an anaerobic area between the UV photo initiators and the UV LED assemblies to facilitate curing of the UV curable coating on the product.

3. The UV curing apparatus of claim 1 or 2, further comprising a sensor for measuring volatile organic compounds (VOCs) emitted during the curing process, said sensor being connected to the computer control unit.

4. The UV curing apparatus of any one of the claims 1-3 further comprising a photoacoustic resonance sensor for (intermittently) determining the thickness of the curing layer by photoacoustic resonance spectrometry based on pulsation of the emitted LED light.

5. The UV curing apparatus of claim 4, wherein the computer control unit further receives information from the photoacoustic resonance sensor on the thickness of the curable coating and in response thereto controls the curing process.

## Patentansprüche

1. UV-Aushärtungs-Gerät zum Aushärten eines UV-aushärtbaren Produkts mit einer UV-aushärtbaren Beschichtung darauf, umfassend:
mindestens zwei Reihen von UV-LEDs;
einen Positionierungsmechanismus zum Positionieren des UV-aushärtbaren Produkts in der Lichtzone der UV LEDs;
**dadurch gekennzeichnet, dass** das UV-Aushärtungs-Gerät weiter umfasst:
eine thermographische Kamera (2) zum Überprüfen des Aushärtens der UV-aushärtbaren Beschichtung, Tinte oder Klebstoff;
und wobei eine Computersteuerungseinheit den Aushärtprozess über den Positionierungsmechanismus steuert, indem das Produkt in der Lichtzone als Antwort auf die Aushärtinformation, erhalten von der thermographischen Kamera (2), positioniert wird.

2. UV-Aushärtungs-Gerät gemäß Anspruch 1, weiter umfassend einen Gas-Injektor zum Injizieren von Gas in den anaeroben Bereich zwischen den UV-PhotoInitiatoren und den UV-LED-Vorrichtungen, um das Aushärten der UV-aushärtbaren Beschichtung auf dem Produkt zu erleichtern.

3. UV-Aushärtungs-Gerät gemäß Anspruch 1 oder 2, weiter umfassend einen Sensor zum Messen der flüchtigen organischen Verbindungen (*volatile organic compounds, VOC*), die während des Aushärtverfahrens emittiert werden, wobei der Sensor mit der Computersteuerungseinheit verbunden ist.

4. UV-Aushärtungs-Gerät gemäß einem der Ansprüche 1-3, weiter umfassend einen photoakustischen Resonanzsensor zum (intermittierenden) Bestimmen der Dicke der aushärtbaren Schicht mittels photoakustischer Resonanzspektrometrie basierend auf dem Pulsieren des emitierten LED-Lichts.

5. UV-Aushärtungs-Gerät gemäß Anspruch 4, wobei die Computersteuerungseinheit weiter Informationen vom photoakustischen Resonanzsensor über die Dicke der aushärtbaren Beschichtung erhält und in Antwort darauf das Aushärtverfahren steuert.

## Revendications

1. Appareil pour le séchage par UV pour sécher un produit durcissable par UV ayant un revêtement durcissable par UV, comprenant:
au moins deux gammes d'UV-LEDs;
un mécanisme de positionnement pour positionner le produit durcissable par UV dans la zone lumière des UV-LED;
**caractérisé en ce que** l'appareil pour le séchage par UV comprend en outre:
une caméra thermographique (2) pour surveiller le séchage du revêtement, de l'encre ou de l'adhésif durcissable par UV;
et dans lequel une unité de commande informatique dirige le mécanisme de positionnement en positionnant le produit dans la zone lumière en réponse aux informations sur le séchage obtenu par la caméra thermographique (2).

2. Appareil pour le séchage par UV selon la revendication 1, comprenant en outre un injecteur de gaze pour injecter un gaze dans un espace anaérobie entre les photo-initiateurs UV et les dispositifs d'UV-LED pour faciliter le séchage du revêtement durcissable sur le produit.

3. Appareil pour le séchage par UV selon la revendication 1 ou 2, comprenant en outre un capteur pour mesurer des composés organiques volatiles (*volatile organic compounds, VOC*) émis pendant le procédé de séchage, ledit capteur étant connecté à l'unité de commande informatique.

4. Appareil pour le séchage par UV selon l'une des revendications 1 à 3, comprenant en outre un capteur de résonance photoacoustique pour déterminer (de façon intermittente) l'épaisseur de la couche durcissable par la spectroscopie résonance photoacoustique basé sur la pulsation émise par la lumière LED.

5. Appareil pour le séchage par UV selon la revendication 4, dans lequel l'unité de commande informatique reçoit d'informations du capteur de résonance photoacoustique sur l'épaisseur du revêtement durcissable et dirige le procédé de séchage en réponse audits.
